# EUROPEAN PATENT SPECIFICATION

(11) **EP 3 898 188 B1**
(45) Date of publication and mention of the grant of the patent: **05.07.2023**
(21) Application number: 19898007.0
(22) Date of filing: 17.12.2019
(51) Int. Cl.: B29C 64/209, B29C 64/295, B29C 64/227, B29C 64/35, B33Y 30/00, B33Y 40/00

(54) **APPARATUS, SYSTEM AND METHOD FOR PLUG CLEARING IN AN ADDITIVE MANUFACTURING PRINT HEAD**
VORRICHTUNG, SYSTEM UND VERFAHREN ZUR REINIGUNG VON STECKERN IN EINEM DRUCKKOPF FÜR DIE GENERATIVE FERTIGUNG
APPAREIL, SYSTÈME ET PROCÉDÉ D'ÉLIMINATION DE BOUCHON DANS UNE TÊTE D'IMPRESSION DE FABRICATION ADDITIVE

(30) Priority: 19.12.2018 US 201862782076 P
(43) Date of publication of application: 27.10.2021
(73) Proprietor: Jabil Inc., St. Petersburg, Florida 33716 (US)
(72) Inventor: KLIMCZAK, Scott, St. Petersburg, Florida 33716 (US); RODGERS, Luke, St. Petersburg, Florida 33716 (US); BURGESS, Darin, St. Petersburg, FL 33716 (US)
(74) Representative: Gulde & Partner
(86) International application number: PCT/US2019/066747
(87) International publication number: WO 2020/131808

(56) References cited:
- CN-A- 105 235 218
- US-A1- 2016 339 634
- US-A1- 2017 252 817
- US-A1- 2017 315 526

## Description

### BACKGROUND

### Field of the Disclosure

The present disclosure relates to additive manufacturing, and, more specifically, to an apparatus, system and method for plug clearing in an additive manufacturing print head.

### Description of the Background

Additive manufacturing, including three dimensional printing, has constituted a very significant advance in the development of not only printing technologies, but also of product research and development capabilities, prototyping capabilities, and experimental capabilities, by way of example. Of available additive manufacturing (collectively "3D printing") technologies, fused deposition of material ("FDM") printing is one of the most significant types of 3D printing that has been developed.

FDM is an additive manufacturing technology that allows for the creation of 3D elements on a layer-by-layer basis, starting with the base, or bottom, layer of a printed element and printing until the top, or last, layer via the use of, for example, heating and extruding thermoplastic filaments into the successive layers. Simplistically stated, an FDM system includes a print head from which the print material filament is fed through a material guide to a heated nozzle, an X-Y planar control for moving the print head in the X-Y plane, and a print platform upon which the base is printed and which additionally moves in the Z-axis as successive layers are printed.

More particularly, the FDM printer nozzle heats the thermoplastic print filament received through the material guide from the print head to a semi-liquid state, and typically deposits the semi-liquid thermoplastic in variably sized beads along the X-Y planar extrusion printing path plan provided for the building of each successive layer of the element. The printed bead/trace size may vary based on the part, or aspect(s) of the part, then-being printed. Further, if structural support for an aspect of a part is needed, the trace printed by the FDM printer may include removable material to act as a sort of scaffolding to support the aspect of the part for which support is needed. Accordingly, FDM may be used to build simple or complex geometries for experimental or functional parts, such as for use in prototyping, low volume production, manufacturing aids, and the like.

However, the use of FDM in broader applications, such as medium to high volume production, is severely limited due to a number of factors affecting FDM, and in particular affecting the printing speed, quality, and efficiency of the FDM process. As referenced, in FDM printing it is typical that a thermoplastic is extruded from the print head, and then heated to a semi-liquid state and pushed outwardly from the print nozzle, under controls operating pursuant to the print plan, onto either a print plate/platform or a previous layer of the part being produced. The nozzle is moved about by the robotic X-Y planar adjustment of the print head in accordance with the pre-entered geometry of the print plan, such as may be entered into a processor, to control the robotic movements to form the part desired.

However, current limitations on the cost, efficiency, and performance of FDM additive manufacturing often occur due to the nature of known print heads, material guides, nozzles and filament heaters (may be collectively referred to herein as "print head"). In short, in a typical known print head, print material is fed from a spool through two (or more) print hobs that serve to extrude the print material through a material guide toward the "hot end", i.e., the heater and the print nozzle output, of the printer. In known embodiments, a motor turns either or both hobs having the print material therebetween in order to feed the print material from the spool through the material guide to the "hot end" that includes the print nozzle.

Accordingly, in some printers such as FDM printers, there is a "transition point" at which the "cold", i.e., unmelted, filament in the material guide is heated to the point of liquefication for printing. However, the temperature control that provides for the "transition point" to the hot end, i.e., the point at which the "cold" filament begins to soften under heat so as to allow for printing, must be highly refined, at least to avoid clogging as the cold filament enters the transition point. That is, if the cold filament is extruded too quickly and does not melt adequately until after the transition point, the filament may undesirably harden at the transition point, and thereby form a clog that may cause the cessation of printing. Yet further, once a clog develops at the cold side of the transition point, it is very difficult to clear in the known art, at least in part because the print head assembly typically includes no heater at the cold end of the print head.

US 2016/339634 A1 relates to fused deposition modelling (FDM) printers and fused filament modelling (FFM) printers comprising a lower first-temperature-controlled-block and a higher second-temperature-controlled-block, the second-temperature-controlled-block at least partially about an upper aspect of a transition section of an extrusion core.

### SUMMARY

The present invention concerns a print head according to the appended claim 1. The print head includes: at least two hobs suitable to receive and extrude therebetween a print material filament for the additive manufacturing; a material guide suitable to receive the extruded print material filament; at least one heater element coupled to a transition point along the material guide distally from the at least two hobs, wherein the transition point comprises an at least partial liquefication of the print material within the material guide by the at least one heater element to allow for printing of the at least partially liquefied print material; and at least one secondary heater at least partially about an upper aspect of the transition point and suitable to at least heat the upper aspect upon a clog in the material guide to liquefy the clog, wherein the secondary heater additionally comprise cooling hardware, which may be selectively actuated.

The secondary heater may comprise a radial shape, and the material guide may pass through a port approximately centered through the secondary heater. The secondary heater may comprise a stack of radial devices, each may have a port therethrough suitable to receive the material guide. The secondary heater may comprise multiple devices laterally along opposing sides of the material guide.

The secondary heater may be configured to heat the upper aspect upon occurrence of a non-clog trigger. The non-clog trigger may be pre-stored in a print plan. The non-clog trigger may be a temperature.

The secondary heater may provide pulsed heat or constant heat

The additional cooling hardware of the secondary heater may provide cooling.

The clog may comprise an anticipated clog. The clog may be indicated by current drawn to drive the at least two hobs. The current may be drawn by a driver motor.

The print head may further comprise a controller associated with at least the secondary heater and may be suitable for executing a print plan. The controller may actuate the secondary heater responsive to a pre-print process.

The print head may further comprise a plurality of sensors communicative with the controller for sensing printing. The secondary heater may heat the transition point responsive to the sensing the printing. The sensing may indicate the clog. The secondary heater may be deactivated upon clearing of the clog.

The print head may further comprise a print nozzle in fluid communication with the at least partially liquefied print material and may be suitable to print the at least partially liquefied print material.

### BRIEF DESCRIPTION OF THE DRAWINGS

The disclosed non-limiting embodiments are discussed in relation to the drawings appended hereto and forming part hereof, wherein like numerals indicate like elements, and in which:
FIG. 1 is an illustration of an additive manufacturing printer;
FIG. 2 is an illustration of an additive manufacturing system:
FIG. 3 illustrates an exemplary secondary heater system for additive manufacturing;
FIG. 4 illustrates an exemplary secondary heater system for additive manufacturing; and
FIG. 5 illustrates a computing system.

### DETAILED DESCRIPTION

The figures and descriptions provided herein may have been simplified to illustrate aspects that are relevant for a clear understanding of the herein described apparatuses, systems, and methods, while eliminating, for the purpose of clarity, other aspects that may be found in typical similar devices, systems, and methods. Those of ordinary skill may thus recognize that other elements and/or operations may be desirable and/or necessary to implement the devices, systems, and methods described herein. But because such elements and operations are known in the art, and because they do not facilitate a better understanding of the present disclosure, for the sake of brevity a discussion of such elements and operations may not be provided herein.

The terminology used herein is for the purpose of describing particular embodiments only and is not intended to be limiting. For example, as used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof.

When an element or layer is referred to as being "on", "engaged to", "connected to" or "coupled to" another element or layer, it may be directly on, engaged, connected or coupled to the other element or layer, or intervening elements or layers may be present, unless clearly indicated otherwise. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (*e.g.,* "between" versus "directly between," "adjacent" versus "directly adjacent," etc.). Further, as used herein the term "and/or" includes any and all combinations of one or more of the associated listed items.

Yet further, although the terms first, second, third, etc. may be used herein to describe various elements, components, regions, layers and/or sections, these elements, components, regions, layers and/or sections should not be limited by these terms. These terms may be only used to distinguish one element, component, region, layer or section from another element, component, region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the embodiments. The plug-removing heater(s) may be subjected to one or more controllers in order to optimally carry out this functionality. More particularly, the print head according to the invention includes a secondary heating element at the "cool side" of the transition point, such that a clog/plug, as discussed throughout, may be controlled to selectively heat the filament at or near the transition point to the point of melt/re-melt.

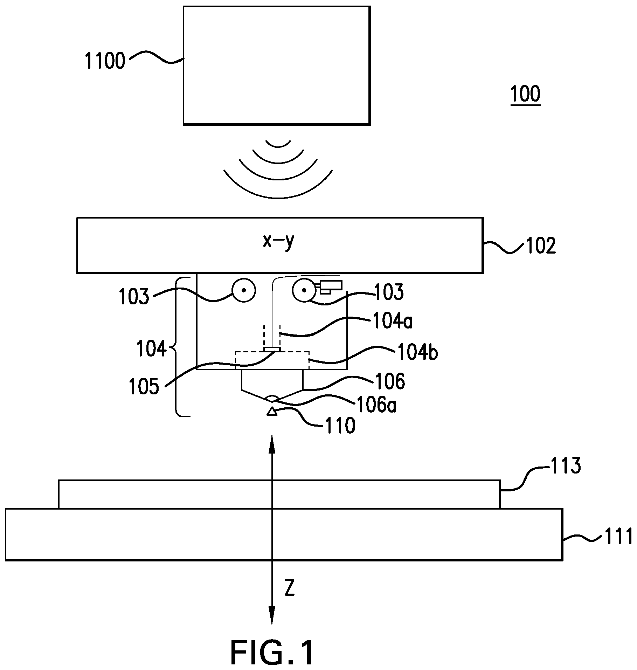

Figure 1 is a block diagram illustrating a FDM printer 100. In the illustration, the printer includes an X-Y axis driver 102 suitable to move the print head 104, and thus the print nozzle 106, in a two dimensional plane, i.e., along the X and Y axes. Further included in the printer 100 for additive manufacturing are the aforementioned print head 104, which includes material guide 104a, heater 104b, and print nozzle 106. As is evident from Figure 1, printing may occur upon the flow of heated print material outwardly from the nozzle 106 along a Z axis with respect to the X-Y planar movement of the X-Y driver 102. Thereby, layers of printed material 110 may be provided from the nozzle 106 onto the build plate 111 along a path dictated by the X-Y driver 102 to form layers 113.

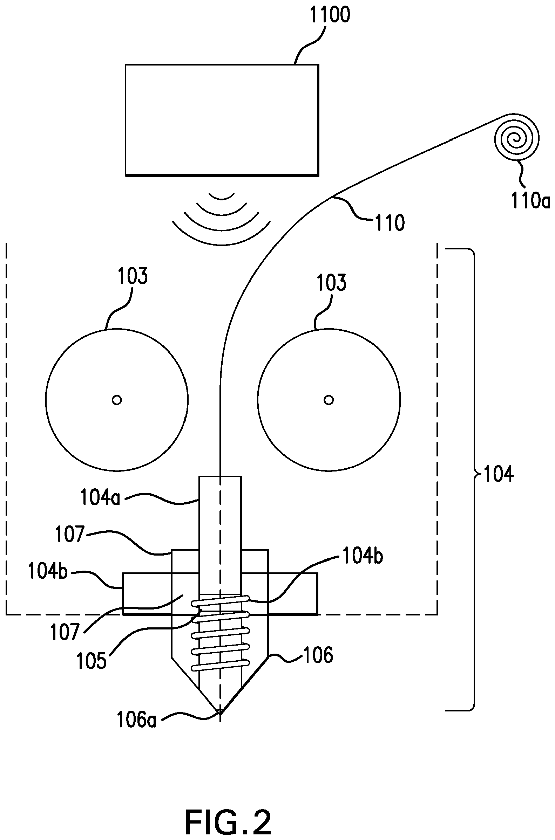

Figure 2 illustrates with greater particularity a print head 104, material guide 104a, heater 104b and nozzle 106 system for an exemplary additive manufacturing device, such as a 3-D printer, such as a FDM printer. As illustrated, the print material 110 is extruded via hobs 103 of the head 104 from a spool of print material 110a into a material guide 104a, through which the material 110 reaches the transition point 105, at which point 105 heater 104b heats the print material 110 to at least a semi-liquid state so that the print material 110 may be printed through the nozzle 106. That is, as the heater 104b heats the print material 110, the print material is at least partially liquefied to traverse through the nozzle 106 for output from the end port 106a of the nozzle at a point along the nozzle distal from the print head 104. Thereby, the extruded material is "printed" outwardly from the port 106a along the Z axis and along a X-Y planar path determined by the print plan executed by the controller 1100 associated with the print head 104.

More particularly, the print head 104 serves the function of extruding the print filament 110 into the material guide 104a, and thus to the transition point 105, at the speed dictated by the rotation of the hobs 103 associated with the print head 104 and controlled by control system 1100. More particularly, it is desirable that the print head 104 be enabled to go from significant filament feed speed to zero speed, and from zero to significant filament feed speed, readily and without clog formation at or near the transition point 105. More specifically, the filament 110 may be fed by the print head 104 through the material guide 104a and into the hot end 106 in such a manner that "cold" and "hot" zones may exist which enable the maintenance of the cold filament as cold until the transition point, after which transition zone the melted material may pass through the nozzle 106 for discharge of the melted filament from the print port 106a.

In relation to the discussion herein throughout, the location and temperature of (and on either "side" of) the transition point 105 may vary with the nozzle/print head type, and/or with the type of print material 110. It should also be noted that the transition point may vary as to the adjacent geometry of the print system.

As shown, the print head 104 feeds print material filament 110 into the upper portion of the material guide 104a, and the heat applied by the heater 104b to the filament 110 causes a portion of the filament 110 to melt as it passes through transition point 105. It will be appreciated that, if the speed at which the hobs 103 of the print head 104 feed the filament 110 to the heater 104b exceeds the melting capabilities of the system, the unmelted portion of the print filament 110 will penetrate through the transition point 105 and may clog the nozzle 106. Thereby, a physical and algorithmic association of the rate of rotation of the hobs, and the melting capacity of the heater 104b to melt the print filament 110 for printing, may be employed in the disclosed embodiments. This algorithmic association may additionally include the other temperature controls discussed throughout, which may include an assessment of data generated by one or more sensors 107, such as may be communicatively associated with control system 1100, and such as may indicate a clog, by way of non-limiting example.

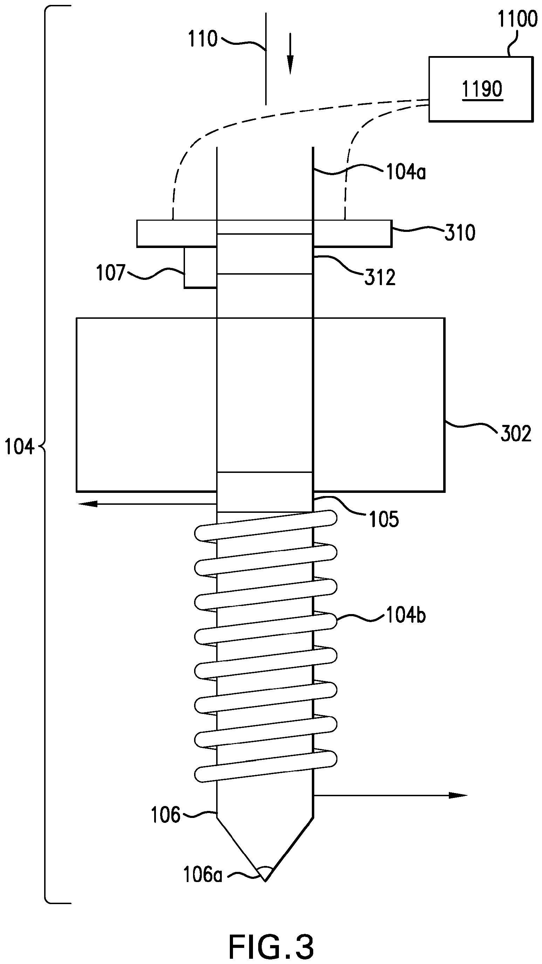

Figure 3 illustrates a print head 104 having a primary heater 104b about an upper aspect of nozzle 106, an optional block having high thermal mass 302 adjacent to transition point 105, and a secondary heater 310 along the material guide 104a at the "cool side" of the transition point 105. As is the case with other aspects of the print head as discussed above, the secondary heater 310 may be operated pursuant to the control algorithms 1190 executed by controller 1100.

More particularly, controller 1100 may actuate secondary heater 310 only in certain instances, such as during start to enhance the melt process, and/or only during an instance of clogging. As such, the controller 1100 may actuate the secondary heater 310 at a certain time in the print plan, such as at the inception of the print plan to enhance the initial melt; or the secondary heater 310 may be actuated upon occurrence of a trigger, such as may be indicated by a sensor 107 or by feedback from system hardware.

By way of non-limiting example, an inlet plug 312 may be detected based on the presence of excessive motor current in feeding the filament, as reflected by the motor driver, and/or via a sensor 107. Consequently, if the motor current exceeds a defined threshold value, the secondary heater 310 may be energized by the controller 1100 to clear the presumptively present inlet plug 312, based on the current exceeding the control algorithm threshold.

The activation of the secondary heater 310 may vary, and may be part of a broader protocol implemented by the control algorithm 1190. For example, the extruder may repeat attempts to drive the filament 110, while continuously or periodically sensing the filament-driving motor current until the sensed current indicates that the inlet plug 312 has been cleared. Once the plug 312 is cleared, i.e., once the actuation criteria for the secondary heater 310 in the control algorithm 1190 is met, the secondary heater 310 may be deenergized, and the print head 104 may be returned by the control algorithm 1190 to standard mode operation.

By way of non-limiting example, the secondary heater 310 may be or include one or more wires, such as nichrome wires, wrapped about the material guide 104a/nozzle 106 at the cold side of the transition point. Similarly, the secondary heater 310 may be ceramic or metallic in composition. The secondary heater 310 may have any suitable shape so as to heat the clog point, such as a radial shape or a block shape; may be a single heater, multiple stacked heaters, and/or multiple heaters on different sides of the material guide, by way of example; and may include one or more entry holes 320 to allow the material guide 104a to pass therethrough, for example. Of note, the secondary heater additionally comprises cooling hardware, which may be selectively actuated as discussed herein, and it will be appreciated by the skilled artisan that, to the extent the secondary heater 310 is capable of both heating and cooling, additional hardware may be present in secondary heater.

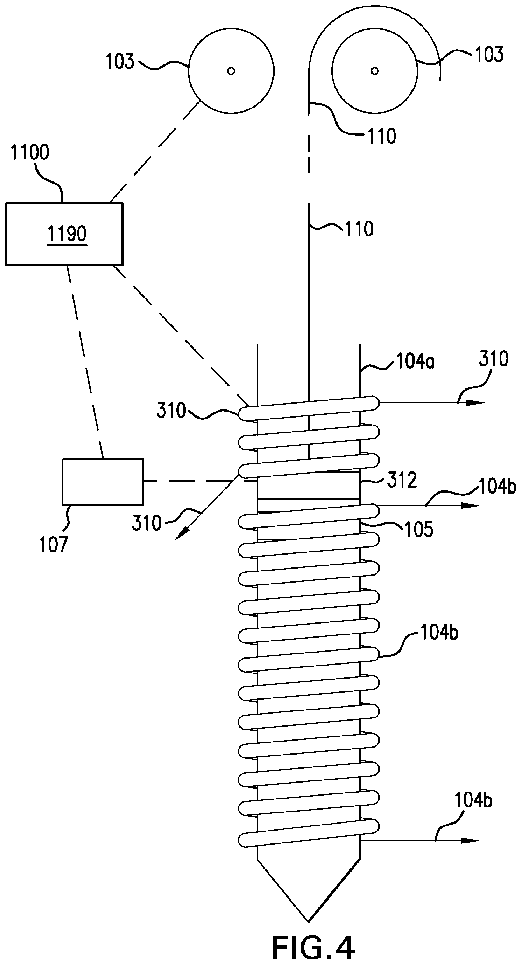

By way of example, and as illustrated in Figure 4, one or more temperature sensors 107 may be provided on or in environmental association with the print head 104, such as along the material guide 104a and/or at the transition point 105 discussed throughout. This sensor(s) 107 may be communicative with one or more control systems 1100 employing one or more control algorithms 1190 that control, for example, the power supplied to the secondary heater(s) 310 (as discussed above in Figure 3), to provide a real-time plug-clearing system. Of course, other aspects may be controlled by algorithm(s) 1190 in conjunction with the secondary heater control, such as the rate of actuation of hob 103, the X-Y and Z axis print plan, and the like, by way of non-limiting example.

Some embodiments may allow for a look-ahead by the controller 1100 at the print plan, and consequent adjustment of the temperature at the transition point, such as to allow for an increase/decrease in print material push pressure based on the upcoming print action in the print plan. More particularly, if the transition point 105 is too cool for an aspect of the print plan, more energy will be required by the heater to melt the print material in the liquefier, and thus the transition point 105 may be "pre-heated" by the secondary heater 310 to thus allow for more force to be applied to the print filament 110, which may allow for higher speed printing.

Moreover, operation parameters may be specifically varied for certain print runs. By way of example, to the extent a particular filament is less likely to form a plug upon a heightened push force, such as due to the stiffness of that filament, secondary heating to or above the glass transition temperature may be enabled at the transition point, such as to allow for higher speed printing.

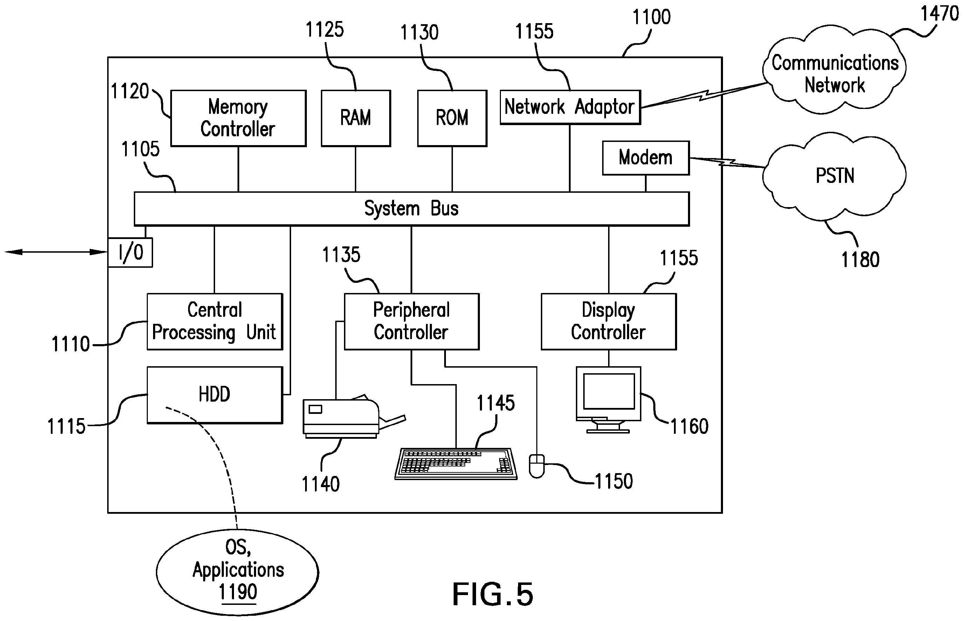

Figure 5 depicts a computing system 1100 for use in association with the herein described systems and methods. Computing system 1100 is capable of executing software, such as an operating system (OS) and/or one or more computing applications 1190, such as applications applying the print plans/algorithms discussed herein, and may execute such applications, such as to control one or more hobs 103, heaters 104b, secondary heater(s) 310 or the like, such as by sending or receiving data to/from, and/or by processing data from, one or more sensors 107, such as may be received at or sent through the illustrated I/O port.

Moreover, algorithm 1190 may additionally operate one or more secondary heaters to optionally heat, as discussed above, such as in the event a clog is sensed and must be melted in order to allow for clearing. Of course, in such an instance, once the clog was sensed as being cleared, the secondary heater(s) may be returned by algorithm 1190 to normal cooling operations.

The operation of exemplary computing system 1100 is controlled primarily by computer readable instructions, such as instructions stored in a computer readable storage medium, such as hard disk drive (HDD) 1115, optical disk (not shown) such as a CD or DVD, solid state drive (not shown) such as a USB "thumb drive," or the like. Such instructions may be executed within central processing unit (CPU) 1110 to cause computing system 1100 to perform the operations discussed throughout. In many known computer servers, workstations, personal computers, and the like, CPU 1110 is implemented in an integrated circuit called a processor.

It is appreciated that, although exemplary computing system 1100 is shown to comprise a single CPU 1110, such description is merely illustrative, as computing system 1100 may comprise a plurality of CPUs 1110. Additionally, computing system 1100 may exploit the resources of remote CPUs (not shown), for example, through communications network 1170 or some other data communications means.

In operation, CPU 1110 fetches, decodes, and executes instructions from a computer readable storage medium, such as HDD 1115. Such instructions may be included in software such as an operating system (OS), executable programs such as algorithm 1190, and the like. Information, such as computer instructions and other computer readable data, is transferred between components of computing system 1100 via the system's main data-transfer path. The main data-transfer path may use a system bus architecture 1105, although other computer architectures (not shown) can be used, such as architectures using serializers and deserializers and crossbar switches to communicate data between devices over serial communication paths. System bus 1105 may include data lines for sending data, address lines for sending addresses, and control lines for sending interrupts and for operating the system bus. Some busses provide bus arbitration that regulates access to the bus by extension cards, controllers, and CPU 1110.

Memory devices coupled to system bus 1105 may include random access memory (RAM) 1125 and/or read only memory (ROM) 1130. Such memories include circuitry that allows information to be stored and retrieved. ROMs 1130 generally contain stored data that cannot be modified. Data stored in RAM 1125 can be read or changed by CPU 1110 or other hardware devices. Access to RAM 1125 and/or ROM 1130 may be controlled by memory controller 1120. Memory controller 1120 may provide an address translation function that translates virtual addresses into physical addresses as instructions are executed. Memory controller 1120 may also provide a memory protection function that isolates processes within the system and isolates system processes from user processes. Thus, a program running in user mode may normally access only memory mapped by its own process virtual address space; in such instances, the program cannot access memory within another process' virtual address space unless memory sharing between the processes has been set up.

In addition, computing system 1100 may contain peripheral communications bus 1135, which is responsible for communicating instructions from CPU 1110 to, and/or receiving data from, peripherals, such as peripherals 1140, 1145, and 1150, which may include printers, keyboards, and/or the sensors, encoders, and the like discussed herein throughout. An example of a peripheral bus 1135 is the Peripheral Component Interconnect (PCI) bus.

Display 1160, which is controlled by display controller 1155, may be used to display visual output and/or presentation generated by or at the request of computing system 1100, responsive to operation of the aforementioned computing programs, such as algorithm 1190. Such visual output may include text, graphics, animated graphics, and/or video, for example. Display 1160 may be implemented with a CRT-based video display, an LCD or LED-based display, a gas plasma-based flat-panel display, a touch-panel display, or the like. Display controller 1155 includes electronic components required to generate a video signal that is sent to display 1160.

Further, computing system 1100 may contain network adapter 1165 which may be used to couple computing system 1100 to external communication network 1170, which may include or provide access to the Internet, an intranet, an extranet, or the like. Communications network 1170 may provide user access for computing system 1100 with means of communicating and transferring software and information electronically. Additionally, communications network 1170 may provide for distributed processing, which involves several computers and the sharing of workloads or cooperative efforts in performing a task. It is appreciated that the network connections shown are exemplary and other means of establishing communications links between computing system 1100 and remote users may be used.

Network adaptor 1165 may communicate to and from network 1170 using any available wired or wireless technologies. Such technologies may include, by way of non-limiting example, cellular, Wi-Fi, Bluetooth, infrared, or the like.

It is appreciated that the computing system 1100 is merely illustrative of a computing environment in which the herein described systems and methods may operate, and does not limit the implementation of the herein described systems and methods in computing environments having differing components and configurations. That is to say, the concepts described herein may be implemented in various computing environments using various components and configurations.

## Claims

1. A print head (104) for additive manufacturing, comprising:
at least two hobs (103) suitable to receive and extrude therebetween a filament of print material (110) for the additive manufacturing;
a material guide (104a) suitable to receive the extruded filament of print material (110);
at least one heater element (104b) coupled to a transition point (105) along the material guide (104a) distally from the at least two hobs (103), wherein the transition point (105) comprises an at least partial liquefication of the print material (110) within the material guide (104a) by the at least one heater element (104b) to allow for printing of the at least partially liquefied print material (110); and
at least one secondary heater (310) at least partially about an upper aspect of the transition point (105) and suitable to at least heat the upper aspect upon a clog in the material guide (104a) to liquefy the clog, **characterized in that** the secondary heater (310) additionally comprises cooling hardware, which is configured to be selectively actuated.

2. The print head (104) of claim 1, wherein the secondary heater (310) comprises a radial shape, and wherein the material guide (104a) passes through a port (320) approximately centered through the secondary heater (310); or
wherein the secondary heater (310) comprises a stack of radial devices, each having a port (320) therethrough suitable to receive the material guide (104a); and/or
wherein the secondary heater (310) comprises multiple devices laterally along opposing sides of the material guide (104a).

3. The print head (104) of claim 1, wherein the clog is indicated by current drawn to drive the at least two hobs (103).

4. The print head (104) of claim 3, wherein the current is drawn by a driver motor.

5. The print head (104) of claim 1, wherein the secondary heater (310) is configured to heat the upper aspect upon occurrence of a non-clog trigger, wherein the non-clog trigger is a temperature.

6. The print head (104) of claim 5, wherein the non-clog trigger is pre-stored in a print plan.

7. The print head (104) of claim 1, further comprising a controller (1100) associated with at least the secondary heater (310), wherein the controller (1100) actuates the secondary heater (310) responsive to a pre-print process.

8. The print head (104) of claim 7, further comprising a plurality of sensors (107) communicative with the controller (1100) for sensing of the printing, wherein the sensing indicates the clog and wherein the secondary heater (310) heats the transition point (105) responsive to the sensing of the printing.

9. The print head (104) of claim 8, wherein the secondary heater (310) is configured to be deactivated upon clearing of the clog.

10. The print head (104) of claim 1, wherein the secondary heater (310) provides pulsed heat or constant heat.

11. The print head (104) of claim 1, further comprising a print nozzle (106) in fluid communication with the at least partially liquefied print material (110) and suitable to print the at least partially liquefied print material (110).

## Patentansprüche

1. Druckkopf (104) für die additive Fertigung, umfassend:
mindestens zwei Wälzfräser (103), die geeignet sind, ein Filament aus Druckmaterial (110) für die additive Fertigung aufzunehmen und dazwischen zu extrudieren;
eine Materialführung (104a), die geeignet ist, das extrudierte Filament des Druckmaterials (110) aufzunehmen;
mindestens ein Heizelement (104b), das mit einem Übergangspunkt (105) entlang der Materialführung (104a) distal von den mindestens zwei Wälzfräsern (103) gekoppelt ist, wobei der Übergangspunkt (105) eine mindestens teilweise Verflüssigung des Druckmaterials (110) innerhalb der Materialführung (104a) durch das mindestens eine Heizelement (104b) umfasst, um das Drucken des mindestens teilweise verflüssigten Druckmaterials (110) zu ermöglichen; und
mindestens einen sekundären Heizer (310), der sich zumindest teilweise um einen oberen Aspekt des Übergangspunktes (105) befindet und geeignet ist, zumindest den oberen Aspekt bei einer Verstopfung in der Materialführung (104a) zu erwärmen, um die Verstopfung zu verflüssigen , **dadurch gekennzeichnet, dass** der sekundäre Heizer (310) zusätzlich Kühlhardware umfasst, die konfiguriert ist, um selektiv betätigt zu werden .

2. Druckkopf (104) nach Anspruch 1, wobei der sekundäre Heizer (310) eine radiale Form aufweist und wobei die Materialführung (104a) durch eine Öffnung (320) verläuft, die ungefähr mittig durch den sekundären Heizer (310) verläuft; oder
wobei der sekundäre Heizer (310) einen Stapel von radialen Vorrichtungen umfasst, die jeweils eine Öffnung (320) dort hindurch aufweisen, die geeignet ist, die Materialführung (104a) aufzunehmen; und/oder
wobei der sekundäre Heizer (310) mehrere Vorrichtungen umfasst, die seitlich entlang gegenüberliegender Seiten der Materialführung (104a) angeordnet sind.

3. Druckkopf (104) nach Anspruch 1, wobei die Verstopfung durch Strom angezeigt wird, der zum Antrieb der mindestens zwei Wälzfräser (103) aufgenommen wird.

4. Druckkopf (104) nach Anspruch 3, wobei der Strom von einem Antriebsmotor aufgenommen wird.

5. Druckkopf (104) nach Anspruch 1, wobei der sekundäre Heizer (310) konfiguriert ist, um den oberen Aspekt bei Auftreten eines Nicht-Verstopfungs-Auslösers zu erhitzen, wobei der Nicht-Verstopfungs-Auslöser eine Temperatur ist.

6. Druckkopf (104) nach Anspruch 5, wobei der Nicht-Verstopfungs-Auslöser in einem Druckplan vorgespeichert ist.

7. Druckkopf (104) nach Anspruch 1, der ferner eine Steuerung (1100) umfasst, die mit mindestens dem sekundären Heizer (310) verbunden ist, wobei die Steuerung (1100) den sekundären Heizer (310) in Reaktion auf einen Vordruckprozess betätigt.

8. Druckkopf (104) nach Anspruch 7, ferner umfassend eine Vielzahl von Sensoren (107), die mit der Steuerung (1100) kommunizieren, um das Drucken zu erfassen, wobei die Erfassung die Verstopfung anzeigt und
wobei der sekundäre Heizer (310) den Übergangspunkt (105) in Reaktion auf die Erfassung des Druckens aufheizt.

9. Druckkopf (104) nach Anspruch 8, wobei der sekundäre Heizer (310) so konfiguriert ist, dass er bei Beseitigung der Verstopfung deaktiviert wird.

10. Druckkopf (104) nach Anspruch 1, wobei der sekundäre Heizer (310) gepulste Wärme oder konstante Wärme liefert.

11. Druckkopf (104) nach Anspruch 1, ferner umfassend eine Druckdüse (106), die in Fluidverbindung mit dem zumindest teilweise verflüssigten Druckmaterial (110) steht und geeignet ist, das zumindest teilweise verflüssigte Druckmaterial (110) zu drucken.

## Revendications

1. Tête d'impression (104) pour la fabrication additive, comprenant :
au moins deux fraises mères développantes (103) aptes à recevoir et à extruder entre elles un filament de matériau d'impression (110) pour la fabrication additive ;
un guide de matériau (104a) apte à recevoir le filament extrudé du matériau d'impression (110) ;
au moins un élément chauffant (104b) couplé à un point de transition (105) le long du guide de matériau (104a) de manière distale des au moins deux fraises mères développantes (103), le point de transition (105) comprenant une liquéfaction au moins partielle du matériau d'impression (110) à l'intérieur du guide de matériau (104a) par au moins un élément chauffant (104b) pour permettre l'impression du matériau d'impression au moins partiellement liquéfié (110) ; et
au moins un dispositif de chauffage secondaire (310) au moins partiellement autour d'un aspect supérieur du point de transition (105) et apte à au moins chauffer l'aspect supérieur lors d'un colmatage dans le guide de matériau (104a) pour liquéfier le colmatage , **caractérisé en ce que** le dispositif de chauffage secondaire (310) comprend en outre un matériel de refroidissement configuré pour être actionné sélectivement.

2. Tête d'impression (104) de la revendication 1, dans laquelle le dispositif de chauffage secondaire (310) comprend une forme radiale, et dans laquelle le guide de matériau (104a) passe à travers un orifice (320) approximativement centré à travers le dispositif de chauffage secondaire (310) ; ou
dans lequel le dispositif de chauffage secondaire (310) comprend un empilement de dispositifs radiaux, chacun ayant un orifice (320) à travers lequel il est possible de recevoir le guide de matériau (104a) ; et/ou
dans lequel le dispositif de chauffage secondaire (310) comprend plusieurs dispositifs latéralement le long de côtés opposés du guide de matériau (104a).

3. Tête d'impression (104) de la revendication 1, dans laquelle le colmatage est indiqué par le courant tiré pour entraîner les au moins deux fraises-mères développantes (103).

4. Tête d'impression (104) de la revendication 3, dans laquelle le courant est tiré par un moteur d'entraînement.

5. Tête d'impression (104) de la revendication 1, dans laquelle le dispositif de chauffage secondaire (310) est configuré pour chauffer l'aspect supérieur à l'apparition d'un déclencheur de non-colmatage , dans lequel le déclencheur de non-colmatage est une température.

6. Tête d'impression (104) de la revendication 5, dans laquelle le déclencheur de non-colmatage est préenregistré dans un plan d'impression.

7. Tête d'impression (104) de la revendication 1, comprenant en outre une commande (1100) associée à au moins le dispositif de chauffage secondaire (310), dans laquelle la commande (1100) commande le dispositif de chauffage secondaire (310) en réponse à un processus de pré-impression .

8. Tête d'impression (104) de la revendication 7, comprenant en outre une pluralité de capteurs (107) communiquant avec la commande (1100) pour la détection de l'impression , dans laquelle la détection indique le colmatage et
dans lequel le dispositif de chauffage secondaire (310) chauffe le point de transition (105) en réponse à la détection de l'impression.

9. Tête d'impression (104) de la revendication 8, dans laquelle le dispositif de chauffage secondaire (310) est configuré pour être désactivé lors de l'élimination du colmatage.

10. Tête d'impression (104) de la revendication 1, dans laquelle le dispositif de chauffage secondaire (310) fournit une chaleur pulsée ou une chaleur constante.

11. Tête d'impression (104) de la revendication 1, comprenant en outre une buse d'impression (106) en communication fluidique avec le matériau d'impression au moins partiellement liquéfié (110) et apte à imprimer le matériau d'impression au moins partiellement liquéfié (110).
